# EUROPEAN PATENT SPECIFICATION

(11) **EP 3 072 745 B1**
(45) Date of publication and mention of the grant of the patent: **29.11.2017**
(21) Application number: 16161243.7
(22) Date of filing: 18.03.2016
(51) Int. Cl.: B60R 7/04, B60R 7/08

(54) **VEHICLE STORAGE ASSEMBLY**
FAHRZEUGAUFBEWAHRUNGSANORDNUNG
ENSEMBLE DE STOCKAGE DE VÉHICULES

(30) Priority: 23.03.2015 WO PCT/US2015/021981
(43) Date of publication of application: 28.09.2016
(73) Proprietor: Shanghai Yanfeng Jinqiao Automotive Trim Systems Co., Ltd. f/k/a Johnson Controls Technology Company, 41468 Neuss (DE)
(72) Inventor: ARENDSEN, Randy L., Zeeland, MI 49464 (US); ANDERSON, Rick Alan, Grand Haven, MI 49417 (US)
(74) Representative: Trinks, Ole

(56) References cited:
- DE-B3-102006 043 540
- US-A- 5 267 761
- US-A- 5 292 174
- US-A- 6 062 623

## Description

### FIELD OF THE INVENTION

The present invention relates to storage assemblies, and more particularly to storage assemblies in a vehicle.

### BACKGROUND OF THE INVENTION

Storage assemblies are commonly found in various locations within a vehicle interior. For example, overhead console assemblies can be equipped with a retractable storage compartment for stowing sunglasses or various other small articles in the interior of the vehicle, such as in the ceiling of the vehicle.

US 5,267,761 A relates to a console for a motor vehicle according to the preamble of claim 1, having a wall structure defining a compartment and a door for closing said compartment wherein the console has a latch mechanism engageable by the door for selectively maintaining the door in a closed position and the latch mechanism is releasable by movement of the door from a normal closed position to an over-closed position. The latch mechanism is provided with a spring which biases the door towards an open position only when the door is moved into an over-closed position, thereby preventing unintentional opening of the door by forces exerted upon the vehicle.
DE 10 2006 043 540 B3 relates to a sun visor for vehicle, particularly for receiving eyeglasses or flat objects. The sun visor has a longitudinal visor body and longitudinal side borders, where the visor body is movable between a non-operational position and an operational position.

US 6,062,623 A relates to a storage bin that is pivotally mounted to a housing and includes a recess having a latching surface which extends in a plane generally orthogonal to the direction of angular motion of the storage bin when it moves from a closed to an open position. A pivoted latch member is mounted in spaced pivotal relationship to the housing and has an end forming a latch stop which selectively engages the latching surface of the recess of the storage bin for preventing movement of the storage bin by blocking movement of the storage bin.

US 5,292,174 A relates to a pocket structure in an automotive seat, wherein a back board is provided at the rear side of seat back, which has a lower half area recessed inwardly of the seat back to define a storage spacing therein, and a pocket board is provided to cover such spacing via a leaf spring so as to define a packet backside of the seat back.

### SUMMARY OF THE INVENTION

The invention provides a console as defined by independent claim 1.

Hence, the invention provides, in one aspect, a console for a vehicle interior. The console comprises a housing formed with a tab, and a cover pivotally coupled to the housing for movement between a closed position and an open position for access. The tab is configured to function as a spring to exert a first force against the cover in the closed position. In some embodiments, the tab may comprise a leaf spring member.

According to some embodiments the tab may comprise a first portion coupled to the housing and a second portion configured to exert the first force against the cover in the closed position. The second portion may comprise a protrusion configured to exert the first force against the cover in the closed position. The protrusion may comprise an arcuate profile.

According to some embodiments, the console further comprises a latch configured to secure the cover to the housing in the closed position. The tab may be configured to at least partially prevent disengagement of the latch.

According to some embodiments of the console, the tab does not exert any force against the cover when in the open position.

According to some embodiments of the console, the first force comprises a preload force.

According to the inventive console, the tab is integrally formed with the housing.

According to some embodiments of the console, console comprises at least one of (a) a storage assembly, (b) a sunglass bin.

According to some embodiments of the console, the console further comprises a biasing member coupled to the housing, wherein when the cover is in the closed position, the biasing member is configured to exert a second force against the cover through the tab. The biasing member may a spring wire, and the second force may comprise a supplemental preload force. The housing may comprise at least one hook configured to couple the biasing member to the housing. The tab may comprise a rib configured to engage the biasing member to prevent axial translation of the biasing member.

The invention provides, in another aspect, a storage assembly for an interior of a vehicle. The storage assembly includes a housing, a cover pivotably coupled to the housing, and a receptacle defined at least partially by the housing or the cover. The cover is pivotable relative to the housing between a closed position in which the receptacle is substantially inaccessible, and an open position in which the receptacle is accessible. The storage assembly also includes a leaf spring member having a first portion attached to the housing and a distal second portion configured to exert a preload force against the cover when in the closed position. includes a leaf spring member having a first portion attached to the housing and a distal second portion configured to exert a preload force against the cover when in the closed position.

Other features and aspects of the invention will become apparent by consideration of the following detailed description and accompanying drawings.

### BRIEF DESCRIPTION OF THE DRAWINGS

FIG. 1 is a top perspective view of a storage assembly in accordance with one embodiment of the invention, illustrating a storage member in an open position.
FIG. 1A is an enlarged, top perspective view of a portion of the storage assembly of FIG. 1.
FIG. 2 is a bottom perspective view of a portion of the storage assembly of FIG. 1, with the storage member removed.
FIG. 3 is an enlarged, top perspective view of a portion of the storage assembly of FIG. 1, illustrating a leaf spring member.
FIG. 4 is an enlarged, bottom perspective view of a portion of the storage assembly of FIG. 1, illustrating the leaf spring member.
FIG. 5A is a cross-sectional view of a portion of the storage assembly of FIG. 1, illustrating the storage member in a closed position and the leaf spring member exerting a preload force against the storage member.
FIG. 5B is an enlarged view of a portion of the storage assembly shown in FIG. 5A.
FIG. 6 is a top perspective view of a storage assembly in accordance with another embodiment of the invention, illustrating a storage member in an open position.

Before embodiments of the present invention are explained in detail, it is to be understood that the invention is not limited in its application to the details of construction and the arrangement of components set forth in the following description or illustrated in the accompanying drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

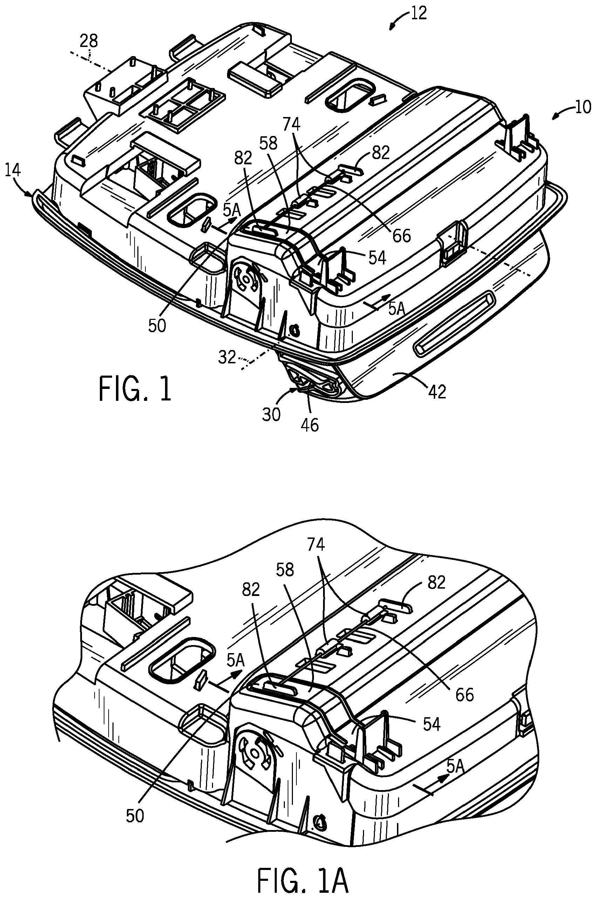

FIG. 1 illustrates a storage assembly 10 in accordance with an embodiment of the invention suitable for installation in an interior ceiling or headliner of a vehicle (not shown). In the illustrated embodiment, the storage assembly 10 is incorporated with an overhead console assembly 12, which can be installed near a rearview mirror of the vehicle and centered between the front seats for easy access to the storage assembly 10 by an operator and/or a passenger of the vehicle. It is to be understood, however, that the console assembly 12 and/or the storage assembly 10 disclosed herein can be used for other applications, and positioned in different orientations or locations within a vehicle. For example, the storage assembly 10 may be incorporated with an overhead console assembly installed in a rear seat area of the vehicle. Also, the storage assembly 10 may be incorporated with a floor console of the vehicle.

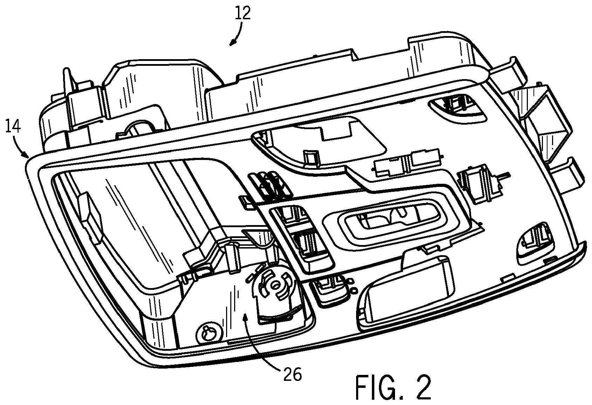

The console assembly 12 includes a bezel or housing 14 defining a recess or cavity 26 on the bottom of the housing (FIG. 2), which is exposed to the vehicle interior. The housing 14 further defines a central axis 28 extending in a direction of length of the vehicle, bisecting the cavity 26 (FIG. 1). The housing 14 may additionally include mounting locations for supporting one or more task lights, electronic displays, remote control devices (e.g., door openers), and/or other vehicle accessories. The housing 14 can be molded as a single piece from ABS, polycarbonate, HDPE, or any other suitable rigid or semi-rigid material.

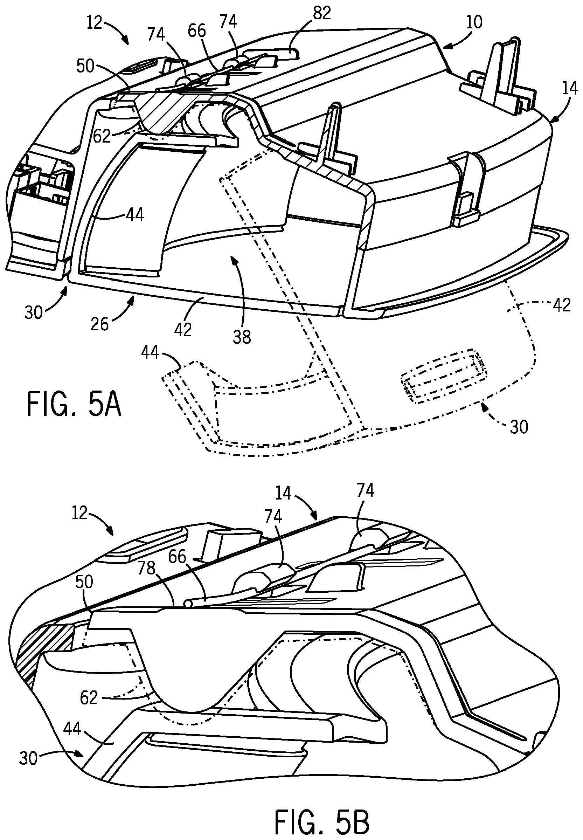

The storage assembly 10 includes a storage member 30 pivotably coupled to the housing and positioned at least partly in the cavity 26 (FIG. 5A). In the illustrated embodiment of the storage assembly 10, the storage member 30 defines a receptacle 38 sized and shaped to store items such as sunglasses or other types of eyeglasses. Alternatively, the receptacle 38 can be sized and shaped for storing other items, such as portable electronic devices, keys, money, tissues, and the like. The receptacle 38 may be lined with fabric or other soft materials to protect the stowed item(s) from scratches or other damage. The storage member 30 is pivotable relative to the housing 14 about a pivot axis 32 (FIG. 1), oriented transverse to the central axis 28, between a closed position (shown in solid lines in FIG. 5A) in which the receptacle 38 is substantially inaccessible, and an open position (shown in phantom lines in FIG. 5A) in which the receptacle 38 is accessible.

With continued reference to FIG. 5A, the storage member 30 includes a cover 42 that in tandem with a rim 44 defines the receptacle 38. When in the storage member 30 is in the closed position, the cover 42 is disposed within and substantially fills an opening to the cavity, thereby preventing access to the contents in the receptacle 38. As shown in FIG. 5A, the rim 44 extends into the cavity 26 when the cover 42 is in the closed position. In an alternative embodiment of the storage assembly 10, the receptacle is defined by the housing 14, and the cover 42 is pivotable relative to the housing 14 between a closed position and an open position like the storage member 30 of FIG. 5A.

With reference to FIG. 1, the storage assembly 10 includes a latch mechanism 46, a portion of which is defined on a side wall of the storage member 30, for securing the storage member 30 in the closed position. The latch mechanism 46 is preferably configured as a push-push latch 46; however, other suitable latches may be employed. The cover 42 of the storage member 30 can be manipulated (i.e., pushed) by the user to disengage the latch mechanism 46 and permit the storage member 30 to pivot towards the open position, allowing access to the receptacle 38.

Further, the storage assembly 10 may include a biasing member (e.g., a torsion spring, not shown) that exerts a torque on the storage member 30 for biasing the storage member 30 toward the open position. The storage assembly 10 may also include a rotary damper (not shown) to resist abrupt deployment of the storage member 30, as a result of the torque applied to the storage member 30, from the closed position to the open position. Alternatively, the biasing member can be omitted, and the storage member 30 can open under the influence of gravity or a user-applied force alone.

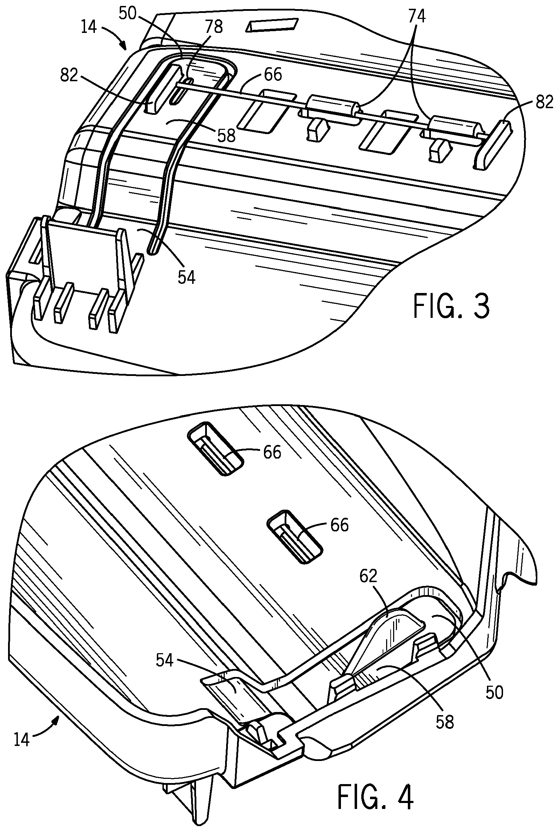

With reference to FIG. 1 and FIG. 1A, the storage assembly 10 includes a leaf spring member 50 configured to exert a preload force against the storage member 30 when in the closed position to prevent inadvertent disengagement of the latch mechanism 46. The leaf spring member 50 includes a first portion 54 attached to the housing 14 and a distal second portion 58 extending therefrom in a cantilevered manner. In the illustrated embodiment, the first portion 54 is integrally formed with the housing 14 on an upper portion thereof (i.e., using an integrally molded living hinge). The bottom of the leaf spring member 50, shown in FIG. 4, includes an arcuate protrusion 62 extending from the distal second portion 58 for engaging the storage member 30. The arcuate profile of the protrusion 62 facilitates sliding between the storage member 30 and the leaf spring member 50 as the storage member 30 is initially lowered from the closed position, or alternatively nearing the closed position. When the storage member 30 is disengaged from the leaf spring member 50 (e.g., when the storage member 30 is in the open position), it does not exert a preload force against the storage member 30.

With reference to FIGS. 1 and 3, to supplement the inherent resilience of the leaf spring member 50, when the storage member 30 is in the closed position, the storage assembly 10 also includes a biasing member 66 for exerting a supplemental preload force against the storage member 30 (via the leaf spring member 50). In the illustrated embodiment of the storage member, the biasing member 66 is configured as a spring wire 66. However, other suitable biasing members may be used (for example, a compression spring). The spring wire 66 includes a portion affixed to the housing 14 via one or more hooks 74 (FIG. 3) and a cantilevered portion engaging the leaf spring member 50. The leaf spring member 50 includes a small rib 78 with which the cantilevered portion of the spring wire 66 is in contact for pre loading the cantilevered portion of the spring wire 66 when the leaf spring member 50 is in an undeflected state. A pair of large ribs 82 is also provided, one of which is formed on the leaf spring member 50 and the other of which is formed on the housing 14, for axially constraining the spring wire 66 relative to the housing.

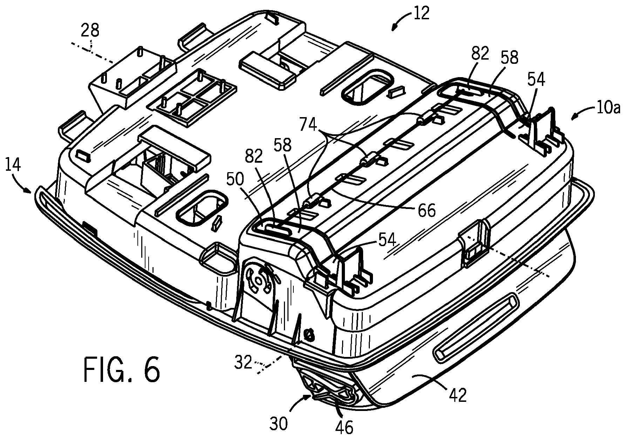

In the illustrated embodiment of the storage assembly 10, the leaf spring member 50 is positioned adjacent a side of the housing 14 (i.e., on one side of the central axis 28). In alternative embodiments, the leaf spring member 50 may be positioned in another location, such as aligned with the central axis 28. In another embodiment of the invention shown in FIG. 6, the storage assembly 10a includes two leaf spring members 50 positioned on opposite sides of the central axis 28 that are preloaded by a longer, single spring wire 66. Otherwise, like features and components to the storage assembly IOa of FIG. 1 are identified with like reference numerals. In this embodiment of the storage assembly 10a, both of the leaf spring members 50 exert a preload force against the storage member 30, as assisted by the spring wire 66. As a result, the total preload force applied to the storage member 30 is more balanced compared to the embodiment of FIG. 1. More than two leaf spring members 50 may alternatively be provided.

In operation of the storage assembly of FIGS. 1-5B, the storage member 30 may be opened from the closed position by a user pushing against the cover 42 to disengage the latch mechanism 46. The biasing member, user-applied force, and/or gravity exert a torque on the storage member 30, causing it to rotate about the pivot axis 32 toward the open position. During rotation, the rotational damper resists abrupt deployment of the storage member 30. In the open position, the user can easily stow or remove an item from the receptacle 38. Once finished, the user applies a force or pushes against the cover 42 to return the storage member 30 to the closed position and engage the latch mechanism 46, concealing any stowed items or articles between the cover 42 and the vehicle ceiling.

As the user closes the storage member 30, the leaf spring member 50 is engaged by the rim 44 of the cover 42 and flexed from an undeflected state (shown in dashed lines in FIGS. 5A and 5B) toward a deflected state. When the storage member 30 is in the closed position, the leaf spring member 50 assumes a deflected state in which the natural resilience of the leaf spring member 50 is supplemented by the spring wire 66 to exert a biasing force against the cover 42 (via the rim 44). The biasing force exerted by the leaf spring member 50 and the spring wire 66 prevents the storage member 30 from inadvertently pivoting upward to disengage the latch mechanism 46. Additionally, the biasing force exerted by the leaf spring member 50 and the spring wire 66 eliminates slack or looseness otherwise inherent in the latch mechanism 46 to prevent the storage member 30 from vibrating, squeaking, and/or rattling within the housing 14 during operation of the vehicle. In an alternative embodiment of the storage assembly 10 in which the receptacle is defined by the housing 14, the leaf spring member 50 may directly engage the cover 42 in the deflected state of the spring member 50.

The leaf spring member 50 is a suitable replacement for rubber bumpers ordinarily used in overhead console assemblies including a sunglasses bin or storage member like that shown in FIG. 5A. Such bumpers are separate components that must be attached to the console housing (e.g., using adhesives or mechanical fastening details) using a secondary manufacturing process. When the sunglasses bin or storage member in an overhead console assembly using such rubber bumpers is closed, the bumpers are compressed and effectively mimick a spring having a non-linear (i.e., second or third order) force-deflection relationship (or spring rate), requiring the user to exert a progressively increasing amount of force to open the sunglasses bin or storage member per unit of displacement, yielding a poor tactile sensation to the user. In contrast, the leaf spring member 50 in the storage assembly 10, or the two leaf spring members 50 in the storage assembly 10a, provide a linear force-deflection relationship (or spring rate), which in tum yields a more desirable tactile sensation to the user because less force is required to return the storage member 30 to the closed position.

Various features and advantages of the invention are set forth in the following claims.

## Claims

1. A console (12) for a vehicle interior comprising:
- a housing (14) formed with a tab (50); and
- a cover (42) pivotally coupled to the housing (14) for movement between a closed position and an open position for access,
wherein the tab (50) is configured to function as a spring to exert a first force against the cover (42) in the closed position,
**characterized in that**
the tab (50) is integrally formed with the housing (14).

2. The console (12) of Claim 1 wherein the tab (50) comprises a leaf spring member.

3. The console (12) of Claim 1 or 2 wherein the tab (50) comprises a first portion (54) coupled to the housing (14) and a second portion (58) configured to exert the first force against the cover (42) in the closed position.

4. The console (12) of Claim 3 wherein the second portion (58) comprises a protrusion (62) configured to exert the first force against the cover (42) in the closed position.

5. The console (12) of Claim 4 wherein the protrusion (62) comprises an arcuate profile.

6. The console (12) of one of Claims 1 to 5 further comprising a latch (46) configured to secure the cover (42) to the housing (14) in the closed position, wherein the tab (50) is configured to at least partially prevent disengagement of the latch (46).

7. The console (12) of one of Claims 1 to 6 wherein the tab (50) does not exert any force against the cover (42) when in the open position.

8. The console (12) of one of Claims 1 to 7 wherein the first force comprises a preload force.

9. The console (12) of one of Claims 1 to 8 wherein the console (12) comprises at least one of (a) a storage assembly, (b) a sunglass bin.

10. The console (12) of one of Claims 1 to 8 further comprising a biasing member (66) coupled to the housing (14), wherein when the cover (42) is in the closed position, the biasing member (66) is configured to exert a second force against the cover (42) through the tab (50).

11. The console (12) of Claim 10 wherein the biasing member (66) is a spring wire (66).

12. The console (12) of Claim 10 or 11 wherein the second force comprises a supplemental preload force.

13. The console (12) of one of Claims 10 to 12 wherein the housing (14) comprises at least one hook (74) configured to couple the biasing member (66) to the housing (14).

14. The console (12) of one of Claims 10 to 13 wherein the tab (50) comprises a rib (82) configured to engage the biasing member (66) to prevent axial translation of the biasing member (66).

## Patentansprüche

1. Konsole (12) für einen Fahrzeuginnenraum, die Folgendes aufweist:
- ein Gehäuse (14), das mit einer Lasche (50) gebildet ist; und
- eine Abdeckung (42), die drehbar mit dem Gehäuse (14) verbunden ist für eine Bewegung zwischen einer geschlossenen Position und einer offenen Position für einen Zugang,
wobei die Lasche (50) dazu ausgebildet ist, als Feder zu fungieren, um eine erste Kraft gegen die Abdeckung (42) in der geschlossenen Position auszuüben,
**dadurch gekennzeichnet, dass**
die Lasche (50) integral mit dem Gehäuse (14) gebildet ist.

2. Konsole (12) nach Anspruch 1,
wobei die Lasche (50) ein Blattfederelement aufweist.

3. Konsole (12) nach Anspruch 1 oder 2,
wobei die Lasche (50) einen ersten Bereich (54), der mit dem Gehäuse (14) verbunden ist, und einen zweiten Bereich (58) aufweist, der dazu ausgebildet ist, die erste Kraft gegen die Abdeckung (42) in der geschlossenen Position auszuüben.

4. Konsole (12) nach Anspruch 3,
wobei der zweite Bereich (58) einen Vorsprung (62) aufweist, der dazu ausgebildet ist, die erste Kraft gegen die Abdeckung (42) in der geschlossenen Position auszuüben.

5. Konsole (12) nach Anspruch 4,
wobei der Vorsprung (62) ein bogenförmiges Profil aufweist.

6. Konsole (12) nach einem der Ansprüche 1 bis 5,
wobei die Konsole ferner einen Verschluss (46) aufweist, der dazu ausgebildet ist, die Abdeckung (42) an dem Gehäuse (14) in der geschlossenen Position zu befestigen, wobei die Lasche (50) dazu ausgebildet ist, zumindest bereichsweise das Außer-Eingriff-Kommen des Verschlusses (46) zu verhindern.

7. Konsole (12) nach einem der Ansprüche 1 bis 6,
wobei die Lasche (50) keinerlei Kraft gegen die Abdeckung (42) in der geöffneten Position ausübt.

8. Konsole (12) nach einem der Ansprüche 1 bis 7,
wobei die erste Kraft eine Vorspannkraft aufweist.

9. Konsole (12) nach einem der Ansprüche 1 bis 8,
wobei die Konsole (12) mindestens eines der Folgenden aufweist:
(a) eine Staufach,
(b) eine Sonnenbrillenhalterung.

10. Konsole (12) nach einem der Ansprüche 1 bis 8,
wobei die Konsole (12) ferner ein Vorspannelement (66) aufweist, der mit dem Gehäuse (14) verbunden ist, wobei das Vorspannelement (66), wenn
die Abdeckung (42) in der geschlossenen Position ist, dazu ausgebildet ist, eine zweite Kraft gegen die Abdeckung (42) mittels der Lasche (50) auszuüben.

11. Konsole (12) nach Anspruch 10,
wobei das Vorspannelement (66) eine Drahtfeder (66) ist.

12. Konsole (12) nach Anspruch 10 oder 11,
wobei die zweite Kraft eine ergänzende Vorspannkraft aufweist.

13. Konsole (12) nach einem der Ansprüche 10 bis 12,
wobei das Gehäuse (14) mindestens einen Haken (74) aufweist, der dazu ausgebildet ist, das Vorspannelement (66) mit dem Gehäuse (14) zu verbinden.

14. Konsole (12) nach einem der Ansprüche 10 bis 13,
wobei die Lasche (15) eine Rippe (82) aufweist, die dazu ausgebildet ist, mit dem Vorspannelement (66) in Eingriff zu kommen, um eine axiale Translation des Vorspannelements (66) zu verhindern.

## Revendications

1. Console (12) pour un intérieur de véhicule comprenant :
- un boîtier (14) formé avec une languette (50) ; et
- un couvercle (42) couplé en pivotement au boîtier (14) pour un mouvement entre une position fermée et une position ouverte pour un accès,
dans laquelle la languette (50) est configurée pour faire office de ressort et exercer une première force contre le couvercle (42) dans la position fermée, **caractérisée en ce que**
la languette (50) est formée de manière intégrale avec le boîtier (14).

2. Console (12) selon la revendication 1, dans laquelle la languette (50) comprend un élément formant ressort à lame.

3. Console (12) selon la revendication 1 2, dans laquelle la languette (50) comprend une première portion (54) couplée au boîtier (14) et une seconde portion (58) configurée pour exercer la première force contre le couvercle (42) dans la position fermée.

4. Console (12) selon la revendication 3, dans laquelle la seconde portion (58) comprend une projection (62) configurée pour exercer la première force contre le couvercle (42) dans la position fermée.

5. Console (12) selon la revendication 4, dans laquelle la projection (62) comprend un profil arqué.

6. Console (12) selon l'une des revendications 1 à 5, comprenant en outre un verrou (46) configuré pour attacher le couvercle (42) sur le boîtier (14) dans la position fermée, dans laquelle la languette (50) est configurée pour au moins partiellement empêcher un désengagement du verrou (46).

7. Console (12) selon l'une des revendications 1 à 6, dans laquelle la languette (50) n'exerce aucune force contre le couvercle (42) lorsqu'il est dans la position ouverte.

8. Console (12) selon l'une des revendications 1 à 7, dans laquelle la première force comprend une force de précharge.

9. Console (12) selon l'une des revendications 1 à 8, dans laquelle la console (12) comprend au moins un élément parmi (a) un ensemble de stockage, (b) une boîte à lunettes de soleil.

10. Console (12) selon l'une des revendications 1 à 8, comprenant en outre un élément de sollicitation (66) couplé au boîtier (14), dans laquelle quand le couvercle (42) est dans la position fermée, l'élément de sollicitation (66) est configuré pour exercer une seconde force contre le couvercle (42) via la languette (50).

11. Console (12) selon la revendication 10, dans laquelle l'élément de sollicitation (66) est un fil-ressort (66).

12. Console (12) selon la revendication 10 ou 11, dans laquelle la seconde force comprend une force de précharge supplémentaire.

13. Console (12) selon l'une des revendications 10 à 12, dans laquelle le boîtier (14) comprend au moins un crochet (74) configuré pour coupler l'élément de sollicitation (66) au boîtier (14).

14. Console (12) selon l'une des revendications 10 à 13, dans laquelle la languette (50) comprend une nervure (82) configurée pour engager l'élément de sollicitation (66) afin d'empêcher une translation axiale de l'élément de sollicitation (66).
